# EUROPÄISCHE PATENTSCHRIFT

(11) **EP 0 499 790 B1**
(45) Veröffentlichungstag und Bekanntmachung des Hinweises auf die Patenterteilung: **21.06.1995**
(21) Anmeldenummer: 92100702.7
(22) Anmeldetag: 17.01.1992
(51) Int. Cl.: B60G 17/01

(54) **Verfahren zum Regeln eines semiaktiven Fahrwerks**
Procedure for semi active regulation of chassis
Procédé de réglage semi-actif du chassis

(30) Priorität: 14.02.1991 DE 4104398; 21.11.1991 DE 4138171
(43) Veröffentlichungstag der Anmeldung: 26.08.1992
(73) Patentinhaber: AUGUST BILSTEIN GMBH & CO. KG, 58240 Ennepetal (DE)
(72) Erfinder: Huang, Zhen, Dipl.-Ing., W-5600 Wuppertal (DE)

(56) Entgegenhaltungen:
- EP-A- 0 188 275
- EP-A- 0 382 480
- WO-A-90/14970
- WO-A-91/00187
- WO-A-91/00188
- DE-A- 3 738 048
- DE-A- 4 015 972
- PATENT ABSTRACTS OF JAPAN vol. 14, no. 379 (M-1012)(4322) 16. August 1990 & JP-A-02 141 320 (MITSUBISHI ELECTRIC CORP.)

## Beschreibung

Die Erfindung betrifft ein Verfahren zum Regeln eines semiaktiven Fahrwerks mit regelbaren Schwingungsdämpfern, welche mit steuerbaren Ventilen versehen sind, bei dem die Relativgeschwindigkeit zwischen Aufbau und Radmasse, die Aufbaubeschleunigung und/oder die Aufbaugeschwindigkeit gemessen oder bestimmt werden und die Eingangsgrößen eines Reglers zur Erzeugung einer Stellgröße für die Dämpfungskraft bilden, dadurch gekennzeichnet, daß der Regler (RG) eine Straßenanregung (x_{E}) erkennend zwischen einer einmaligen und einer periodischen Straßenanregung (x_{E}) unterscheidet, daß bei einer einmaligen Straßenanregung (x_{E}) der Regler (RG) eine Reglerausgangsgröße (I_{R}) abhängig entweder von den Richtungen der zwischen Aufbaumasse und Radmasse sich ergebenden Relativgeschwindigkeit und der vertikalen Aufbaugeschwindigkeit (Skyhook-Algorithmus) oder aber abhängig von der Vorzeichenentwicklung des Produktes aus der Relativgeschwindigkeit zwischen Aufbaumasse und Radmasse und der Aufbaubeschleunigung (Huang-Algorithmus) zur Bildung der Stellgröße für die Dämpfungskraft erzeugt wird.

Der Aufbau eines semiaktiven Fahrwerks läßt sich anhand eines Zweimassenschwingers erläutern, wobei die ungefederte Masse von Rad und Radaufhängung als Radmasse und die anteilige Aufbaumasse des Fahrzeuges als Aufbaumasse bezeichnet ist. Zwischen beiden befindet sich ein Dämpfer-Feder-System. Von einem solchen Radfederungssystem werden zwei sich widersprechende Aufgaben gelöst. Durch die Fortbewegung eines Fahrzeuges auf einer im gewissen Grad unvermeidbar unebenen Straße kommt es über die Räder zu einer Schwingungsanregung. Die resultierenden Rad- und Aufbauschwingungen beeinträchtigen den Fahrkomfort und auch die Sicherheit des Fahrzeuges. Damit hat also das Feder-Dämpfersystem einmal die Aufgabe, das Rad so genau wie möglich an der Fahrbahn entlang zu führen, die Kraftübertragung vom Rad zum Untergrund auf möglichst hohem Niveau zu halten, und andererseits die aus den Straßenunebenheiten resultierenden Achsbewegungen auszugleichen, um den Fahrkomfort für die Insassen zu steigern. Durch Einstellung der Dämpferkraft des Schwingungsdämpfers in Abhängigkeit der Straßenanregung können im hohen Maße die auftretenden Schwingungen absorbiert und die Fahrsicherheit gewährleistet werden.

Als Regelprinzip zur Veränderung der Dämpfungskraft von Schwingungsdämpfern ist der z.B. in der US-PS 3.807.678 offenbarte Skyhook-Regelalgorithmus bekannt. Nach diesem Algorithmus wird die Dämpfungskraft folgendermaßen gesteuert: Wenn die Relativgeschwindigkeit zwischen Aufbau und Achse und die vertikale Aufbaugeschwindigkeit entgegengesetzt gerichtet sind, wird die Dämpfungskraft in eine weiche Kennung geschaltet. Wenn die Relativ- und die Aufbaugeschwindigkeit gleich bzw. die Dämpfungskraft und die Aufbaugeschwindigkeit entgegengesetzt gerichtet sind, wird die Dämpfungskraft auf eine harte Kennung umgeschaltet.

Ein anderes Regelprinzip zum Verändern der Dämpfereigenschaften eines Schwingungsdämpfers mit steuerbaren Ventilen in Abhängigkeit der Fahrbahnunebenheiten ist aus der deutschen Offenlegungsschrift DE-A-40 15 972 bekannt. Nach diesem als Huang-Regelalgorithmus bekannten Prinzip wird die Dämpfungskraft in der Weise geregelt, daß bei einem Produkt aus Aufbaubeschleunigung und Relativgeschwindigkeit zwischen Aufbau- und Radmasse größer Null das Bypassventil geschlossen und bei einem Produkt kleiner Null das Bypassventil geöffnet wird.

Diese Regelverfahren gewährleisten sehr gut die Einhaltung der Anforderungen an die Fahrsicherheit und den Fahrkomfort bei einmaligen Straßenanregungen, da die auftretenden Schwingungen in einem hohen Maße absorbiert werden. Um jedoch diesen Forderungen gerecht zu werden, wird die Dämpferkraft zwischen harter und weicher Kennung hin- und hergeschaltet, was sich bei periodischen Straßenanregungen durch unangenehme Klopfgeräusche negativ auf das Fahrgefühl der Insassen auswirkt.

Die Aufgabe der Erfindung ist es, ein Verfahren zum Regeln eines semiaktiven Fahrwerks für Kraftfahrzeuge zu schaffen, das bei einmaligen und periodischen Straßenanregungen neben der Einhaltung der Anforderungen an die Fahrsicherheit auch höchstmöglichen Fahrkomfort bietet.

Die Aufgabe wird durch die kennzeichnenden Merkmale des ersten Anspruchs gelöst, wobei für jedes Rad ein Sensor zur Ermittlung der Relativgeschwindigkeit zwischen Aufbau- und Radmasse, ein Beschleunigungssensor zur Ermittlung der Aufbaubeschleunigung und/oder ein Sensor zur Erfassung der Aufbaugeschwindigkeit vorgesehen ist. Die Aufbaugeschwindigkeit kann jedoch auch aus der Aufbaubeschleunigung rechnerisch ermittelt werden.

Der Regler unterscheidet nach der Erkennung einer Straßenanregung zwischen einer einmaligen und einer periodischen Straßenanregung und gibt bei einer einmaligen Anregung eine Reglerausgangsgröße nach dem Huang-Algorithmus oder dem Skyhook-Prinzip aus.

Eine langwellige periodische Straßenanregung liegt vor, wenn sich das Vorzeichen der Aufbaubeschleunigung in einer eine langwellige Anregung definierenden Periodenzeit nicht ändert. Die Dämpfungskraft wird auf eine harte Kennung umgeschaltet.

Um den Einfluß von Fehlerkennungen durch kurzwellige Oberwellen, insbesondere beim Nulldurchgang der Aufbaubeschleunigung, zu vermeiden, bleibt die Dämpfungskraft nach dem ersten Erkennen einer langwelligen Straßenanregung während einer Verzögerungszeit nach dem erstmaligen Vorzeichenwechsel der Aufbaubeschleunigung in der harten Kennung.

Eine kurzwellige Straßenanregung wird erkannt, indem die Zeitintervalle der Schaltsignale zum Umschalten auf harte Dämpfung mit einer halben, eine kurzwellige Erregung definierenden Periodenzeit verglichen werden. Erfolgen die Schaltsignale in kürzeren Abständen als die halbe, eine kurzwellige Straßenanregung kennzeichnende Periodenzeit definiert ist, wird die Dämpfungskraft auf ihre weiche Kennung umgeschaltet.

Bei einer periodischen Straßenanregung und Nichterkennung einer kurzwelligen oder langwelligen Erregung liefert der Regler eine Reglerausgangsgröße nach dem Regelalgorithmus für eine einmalige Straßenanregung.

In einer kostengünstigeren Variante werden die Sensoren nur an den Radfederungssystemen der Vorderachse angebracht. Die für die Hinterachse benötigten Relativgeschwindigkeits- und Aufbaubeschleunigungssignale werden mit einer Verzögerung aus den entsprechenden Signalen der Vorderachse abgeleitet. Die Verzögerungszeit errechnet sich aus dem Radabstand und der Fahrgeschwindigkeit. Die optimale Dämpferkraft für eine notwendige Fahrsicherheit und im Kompromiß dazu für einen guten Fahrkomfort wird außer von der momentanen Straßenanregung auch von Größen wie Lenkwinkel, Bremsnicken, Fahrzeuggeschwindigkeit und Niveauregulierung beeinflußt, die als Hilfsgrößen in den Regelkreis eingehen, indem die Stellgröße für die Dämpferkraft aus der Reglerausgangsgröße und dem Stellgrößenanteil der Hilfsregelgrößen gebildet wird.

Die Erfindung soll anhand eines Ausführungsbeispiels näher erläutert werden. Die zugehörigen Zeichnungen zeigen:
- Fig. 1: die Ausführung eines Fahrwerks mit vier Schwingungsdämpfern,
- Fig. 2: den Aufbau eines regelbaren Schwingungsdämpfers mit integriertem Relativgeschwindigkeitssensor,

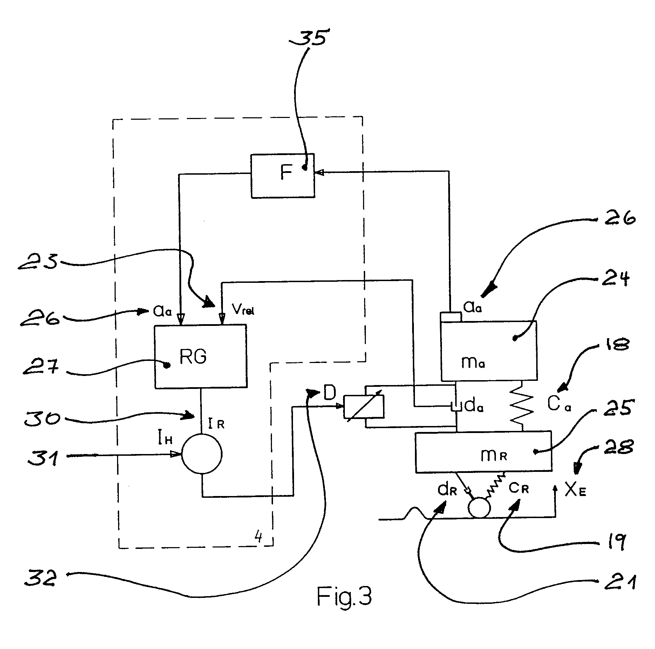

- Fig. 3: das Blockschaltbild der Fahrwerksregelung,
- Fig. 4: die Signalverläufe bei einer einmaligen Straßenanregung mit einer Regelung nach dem Huang-Regelalgorithmus,
- Fig. 5: die Signalverläufe bei einer einmaligen Straßenanregung mit einer Regelung nach dem Skyhook-Prinzip,
- Fig. 6: die Signalverläufe bei einer langwelligen periodischen Straßenanregung,
- Fig. 7: die Signalverläufe bei einer kurzwelligen periodischen Straßenanregung und

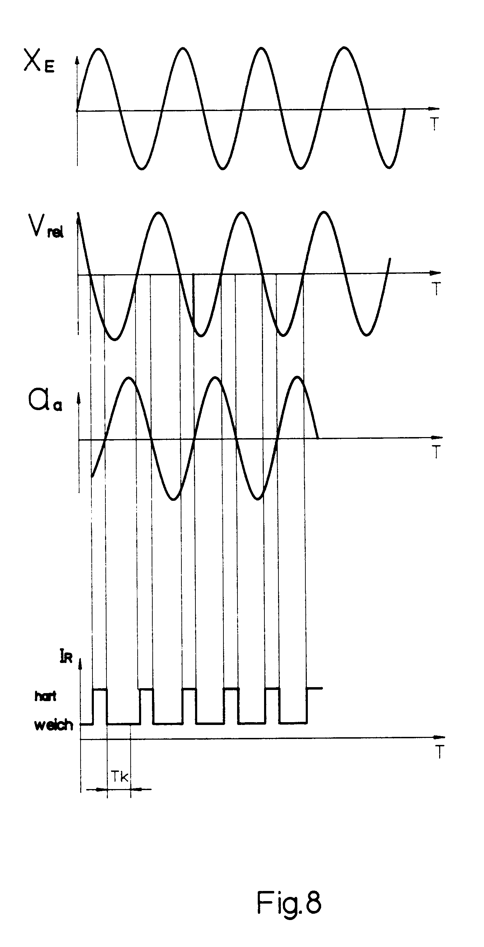

- Fig. 8: die Signalverläufe bei einer mittelwelligen periodischen Straßenanregung.

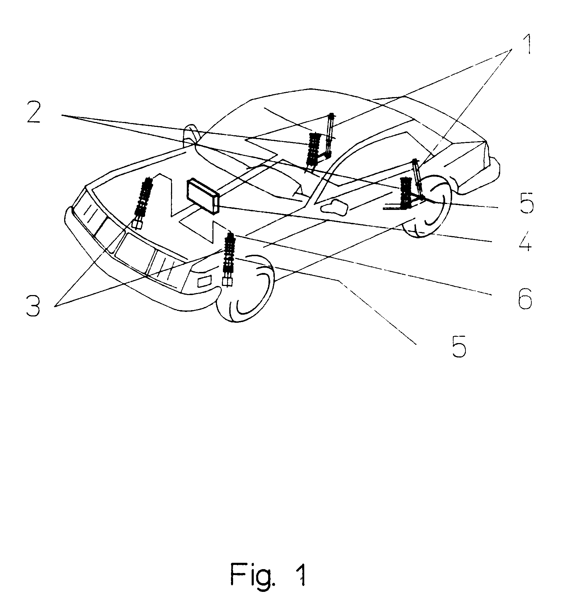

Fig. 1 zeigt die Ausführung eines Fahrwerks für ein Kraftfahrzeug mit vier Stoßdämpfern. Die hintere Achse wird über zwei Schwingungsdämpfer 1 und zwei Wendelfedern 2 abgestützt, die vordere Radaufhängung weist sogenannte niveaugeregelte Federbeine 3 auf. Die Schwingungsdämpfer 1 und die Federbeine 3 dämpfen die Relativbewegungen der ungefederten Massen, des Rades und der Radaufhängung, und die gefederten anteiligen Aufbaumassen des Fahrzeuges. Zum Verändern der Dämpfereigenschaften ist eine Regeleinrichtung 4 vorgesehen, die einen Teil des Fahrzeugrechners darstellt. Die Regeleinrichtung 4 errechnet aus den Signalen der Geschwindigkeitssensoren 5 und der Beschleunigungssensoren 6 eine Stellgröße zur Veränderung der Dämpfungskraft, wobei für jeden Schwingungsdämpfer 1 und jedes Federbein 3 ein Beschleunigungs-und ein Geschwindigkeitssensor vorhanden ist.

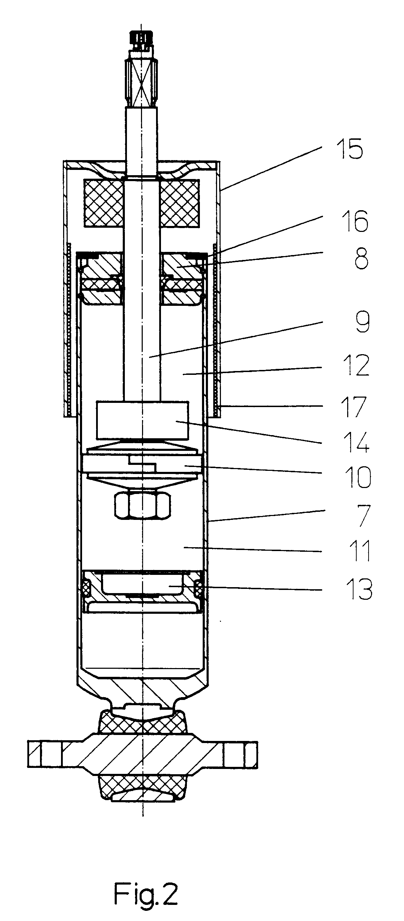

Der Aufbau eines im Fahrwerk verwendeten hydraulischen Schwingungsdämpfers 1 ist in Fig. 2 dargestellt. Der regelbare Einrohrschwingungsdämpfer besteht im wesentlichen aus einem Dämpferzylinder 7, der durch einen Führungsverschluß 8 verschlossen ist, einem mit der Kolbenstange 9 verbundenen Dämpfungskolben 10, der über nicht dargestellte Ventile die Arbeiträume 11, 12 miteinander verbindet, und einem mit der Kolbenstange 9 in Wirkverbindung stehenden Schutzrohr 15. Unterhalb des Trennkolbens 13 befindet sich ein gasgefüllter Ausgleichsraum, welcher zur Kompensation der Volumenzu- bzw. -abnahme im hydraulischen Arbeitsraum durch das ein- bzw. ausfahrende Eigenvolumen der Kolbenstange 9 dient. Der Dämpfungskolben 10 weist weiterhin eine Bypasspassage auf, die mit einem regelbaren Zwei-Wege-Magnetventil 14 zum Einstellen der Dämpfungskraft auf ihre weiche oder harte Kennung ausgerüstet ist.

Der im Schwingungsdämpfer angeordnete Relativgeschwindigkeitssensor besteht aus einem Dauermagneten 16, der zum Beispiel im Führungsverschluß 8 integriert ist, und einer an der Innenwandung des Schutzrohres 15 angeordneten zylindrischen Spule 17. Die elektrischen Anschlüsse der zylindrischen Spule sind in Richtung Fahrzeugaufbau nach außen auf eine nicht dargestellte Auswerteschaltung geführt.

Zur Erläuterung des Regelverfahrens wird das in Fig. 2 gezeigte Blockschaltbild des Einradmodells verwendet. Das lineare Zweimassensystem besteht aus der gefederten anteiligen Aufbaumasse mₐ und der ungefederten Radmasse m_{R}. Zwischen beiden Massen befindet sich ein Dämpfer-Feder-System, bei dem cₐ die Federkonstante und da die Dämpfungskostante darstellen. Die Federkonstante c_{R} und die Dämpfungskonstante d_{R} sind die Konstanten des radimmanenten Dämpfer-Feder-Systems. Die Relativgeschwindigkeit vᵣₑₗ zwischen Aufbaumasse mₐ und Radmasse m_{R} wird über den Geschwindigkeitssensor 5 gemessen und direkt an den Regler RG geleitet. Der an der Aufbaumasse mₐ angeordnete Beschleunigungssensor 6 mißt die Aufbaubeschleunigung aₐ, die an einen Filter F weitergeleitet wird. In diesem Filter werden aufkommende Störgrößen, die über einem gewissen Pegel liegen, herausgefiltert.

Das gefilterte Signal geht als Eingangsgröße an den Regler RG. Der Regler errechnet gemäß dem erfindungsgemäßen Regelalgorithmus eine Reglerausgangsgröße I_{R} zur Beeinflussung des Dämpfungsverhaltens des Schwingungsdämpfers, wobei in dem Ausführungsbeispiel für einmalige Straßenanregungen der Huang-Regelalgorithmus zum Einsatz kommt.

Die Reglerausgangsgröße I_{R} bildet zusammen mit dem Stellgrößenanteil I_{H} der Hilfsgrößen wie Lenkwinkel, Bremsbetätigung, Fahrgeschwindigkeit oder Niveauregulierung die Stellgröße I zur Beeinflussung der Dämpfungskraft.

Bei einem Einsatz des Skyhook-Prinzips für einmalige Erregungen wird neben der Relativgeschwindigkeit zwischen Aufbau- und Radmasse die Aufbaugeschwindigkeit gemessen oder zum Beispiel aus der Aufbaubeschleunigung rechnerisch ermittelt.

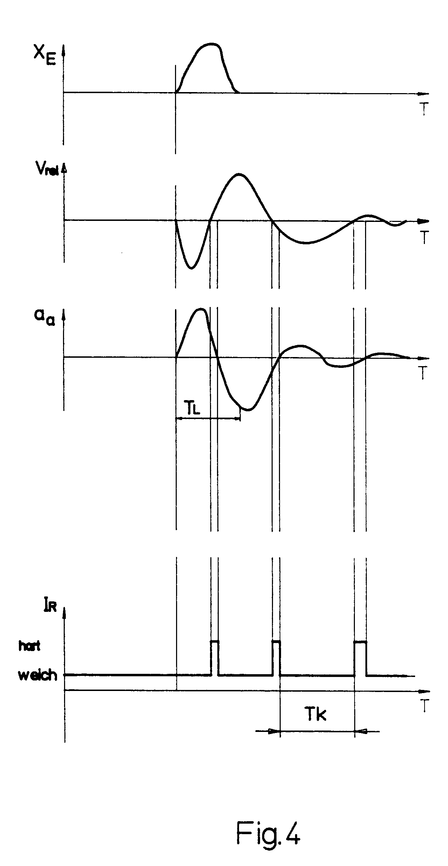

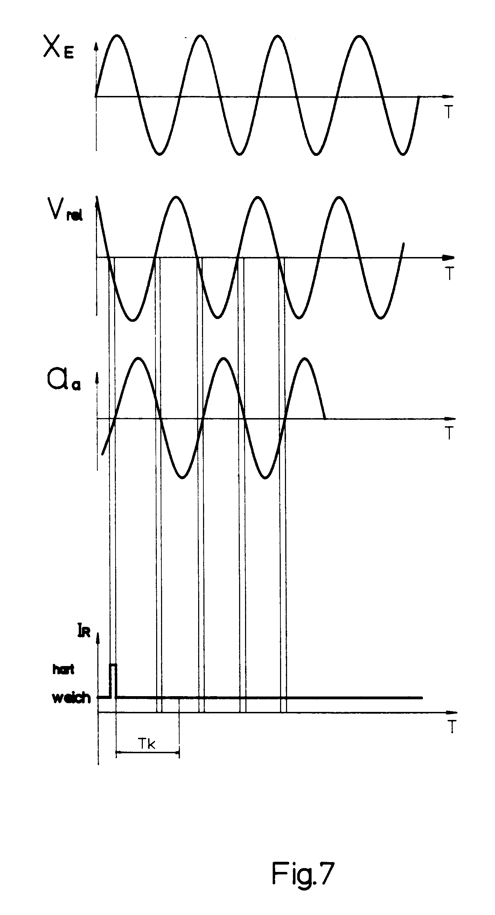

Die Fig. 4 - 7 zeigen die Signalverläufe der Relativgeschwindigkeit von Aufbau- und Radmasse, der Aufbaubeschleunigung und der Stellgröße in Abhängigkeit einer einmaligen und periodischen Straßenanregung.

Bei einer einmaligen Straßenanregung errechnet der Regler RG eine Stellgröße, wie in Fig. 4 dargestellt, nach dem Huang-Regelalgorithmus. Ist das Produkt aus Relativgeschwindigkeit vᵣₑₗ und Aufbaubeschleunigung aₐ größer Null, liefert der Regler RG eine Stellgröße zur Umschaltung des bei Fahrt auf glatter Straße in der weichen Dämpfungskennlinie befindlichen Schwingungsdämpfers auf harte Kennung. Ändert sich das Vorzeichen des Produkts, wird, um die Schwingungen der Aufbaumasse mₐ abzufangen, das Bypassventil geöffnet und die Dämpfungskraft in die weiche Kennung geschaltet. Bis zum vollständigen Abklingen der Schwingungsanregung gibt der Regler eine Stellgröße zum abwechselnden Schließen und Öffnen des Bypassventils an. Bei periodischen Straßenanregungen, wie zum Beispiel bei einer Fahrt auf der Autobahn oder über Kopfsteinpflaster, unterscheidet der Regler zwischen kurz- oder langwelliger Erregung.

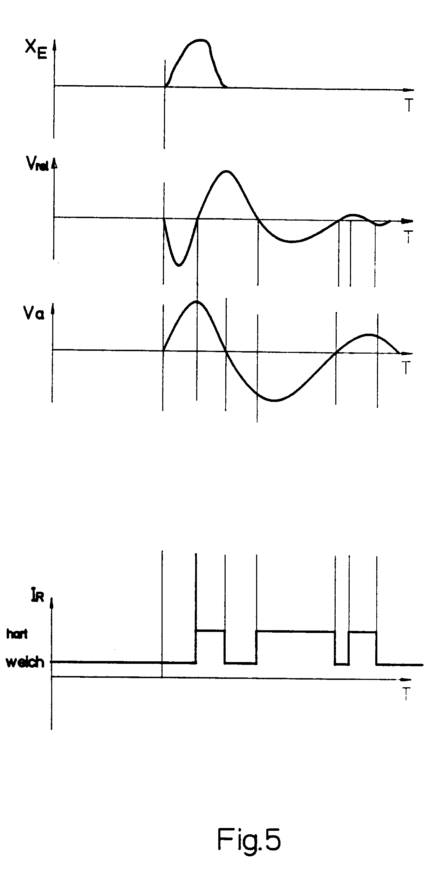

Kommt bei einmaligen Straßenanregungen x_{E} das Skyhook-Prinzip zum Einsatz, muß neben der Relativgeschwindigkeit vᵣₑₗ die Aufbaugeschwindigkeit vₐ aus der Aufbaubeschleunigung aₐ berechnet oder direkt gemessen werden und die Dämpfungskraft wird folgendermaßen geregelt. Wenn das Produkt aus Aufbaugeschwindigkeit vₐ und Relativgeschwindigkeit vᵣₑₗ größer Null ist, wird die Dämpfungskraft des Schwingungsdämpfers in die harte Kennung umgeschaltet. Sind jedoch Relativ- und Aufbaugeschwindigkeit entgegengesetzt gerichtet, das heißt das Produkt ist kleiner/gleich Null, erzeugt der Regler eine Reglerausgangsgröße I_{R} zur Umschaltung in die weiche Dämpfungskennlinie. Die zugehörigen Signalverläufe sind in Fig. 5 gezeigt.

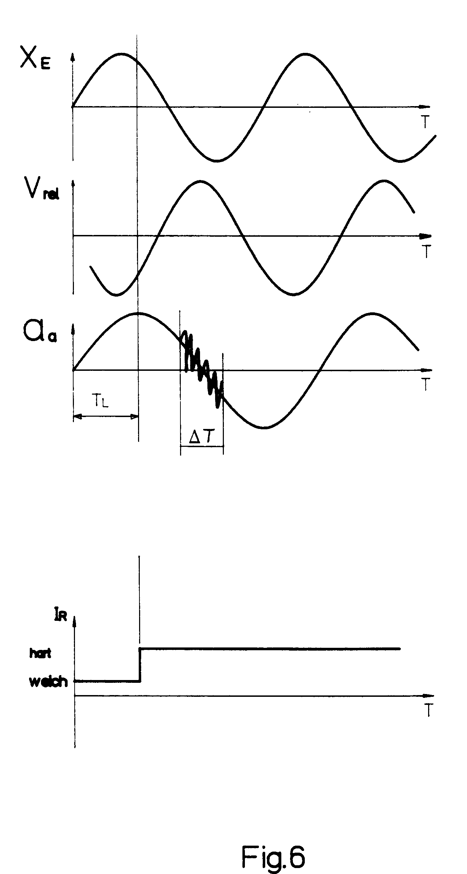

Erkennt der Regler RG eine langwellige Straßenanregung x_{E}, das heißt das Vorzeichen der Aufbaubeschleunigung aₐ ändert sich in der eine langwellige Erregung definierenden Periodenzeit T_{L} nicht, wird eine Reglerausgangsgröße I_{R} zum Schließen des Bypassventils erzeugt (Fig. 6). Nach der einmaligen Erkennung einer langwelligen periodischen Straßenanregung x_{E} wird zur Ausschaltung von Fehlerkennungen, insbesondere durch kurzwellige Oberwellen bei der Aufbaubeschleunigung, während einer Verzögerungszeit ΔT nach dem ersten Vorzeichenwechsel der Aufbaubeschleunigung aₐ die Dämpfungskraft nicht umgeschaltet, sondern verbleibt in der harten Kennung. Die Größe der Verzögerungszeit ΔT ist von der Fahrgeschwindigkeit des Fahrzeuges abhängig.

Bei einer wie in Fig. 5 dargestellten kurzwelligen Straßenanregung x_{E} gibt der Regler RG in der ersten Schwingungsperiode einen Reglerausgangswert I_{R} einer einmaligen Erregung aus, erkennt jedoch danach über den Vergleich der Zeitintervalle T der selbsterrechneten Reglerausgangsgröße I_{R} zum Umschalten auf harte Dämpfung mit der eine kurzwellige Straßenanregung x_{E} definierenden Periodenzeit T_{K} eine kurzwellige Erregung und schaltet auf eine weiche Dämpfungskennlinie.

Zur Gewährleistung der Fahrsicherheit finden solche Hilfsregelgrößen wie Fahrzeuggeschwindigkeit, Bremsnicken, Lenkwinkel und Niveauregulierung Eingang in die Berechnung der Stellgröße und können in bestimmten Situationen, zum Beispiel bei Kurvenfahrten, ein Umschalten auf harte Dämpfung auch bei einer kurzwelligen Straßenanregung bewirken.

Erkennt der Regler bei einer periodischen Straßenanregung weder eine kurzwellige noch eine langwellige Erregung (Fig. 6) wird eine Reglerausgangswert wie bei einer einmaligen Erregung erzeugt.

### Bezugszeichen

- 1: Schwingungsdämpfer
- 2: Wendelfeder
- 3: Federbein
- 4: Regeleinrichtung
- 5: Geschwindigkeitssensor
- 6: Beschleunigungssensor
- 7: Dämpferzylinder
- 8: Führungsverschluß
- 9: Kolbenstange
- 10: Dämpfungskolben
- 11: Arbeitsraum
- 12: Arbeitsraum
- 13: Trennkolben
- 14: Magnetventil
- 15: Schutzrohr
- 16: Dauermagnet
- 17: zylindrische Spule
- 18: cₐ Federkonstante
- 19: c_{R} Federkonstante
- 20: dₐ Dämpfungskonstante
- 21: d_{R} Dämpfungskonstante
- 22: vₐ Aufbaugeschwindigkeit
- 23: vᵣₑₗ Aufbaumassen geschw. relativ
- 24: mₐ Aufbaumasse
- 25: m_{R} Radmasse
- 26: aₐ Aufbaubeschleunigung
- 27: RG Regler
- 28: x_{E} Straßenanregung
- 29: I Stellgröße
- 30: I_{R} Reglerausgangsgröße
- 31: I_{H} Stellgrößenanteil der Hilfsgröße
- 32: D Dämpfungskraft
- 33: T_{L} Periodenzeit einer langwelligen Straßenanregung
- 34: T_{K} Periodenzeit einer kurzwelligen Straßenanregung
- 35: F Filter

## Patentansprüche

1. Verfahren zum Regeln eines semiaktiven Fahrwerks mit regelbaren Schwingungsdämpfern, welche mit sternerbaren Ventilen versehen sind, bei dem die Relativgeschwindigkeit zwischen Aufbau und Radmasse, die Aufbaubeschleunigung und/oder die Aufbaugeschwindigkeit gemessen oder bestimmt werden und die Eingangsgrößen eines Reglers zur Erzeugung einer Stellgröße für die Dämpfungskraft bilden, wobei der Regler (27) eine Straßenanregung (28) erkennend zwischen einer einmaligen und einer periodischen Straßenanregung (28) unterscheidet, und bei einer einmaligen Straßenanregung (28) der Regler (27) eine Reglerausgangsgröße (30) abhängig entweder von den Richtungen der zwischen Aufbaumasse und Radmasse sich ergebenden Relativgeschwindigkeit und der vertikalen Aufbaugeschwindigkeit (Skyhook-Algorithmus) oder aber abhängig von der Vorzeichenentwicklung des Produktes aus der Relativgeschwindigkeit zwischen Aufbaumasse und Radmasse und der Aufbaubeschleunigung (Huang-Algorithmus) zur Bildung der Stellgröße für die Dämpfungskraft (32) erzeugt, dadurch gekennzeichnet, daß bei einer periodischen Straßenanregung (28) im Regler (27) die Erkennung einer langwelligen Erregung derart erfolgt, daß das Vorzeichen der Aufbaubeschleunigung (26) sich in der eine langwellige Straßenanregung definierenden Periodenzeit (33) nicht ändert, und die Erkennung einer kurzwelligen Erregung, indem die Zeitintervalle T der Schaltsignale zum Umschalten auf harte Dämpfung mit einer halben, eine kurzwellige Straßenanregung (28) definierenden Periodenzeit T_{K} (34) derart verglichen werden, daß bei T < T_{K} eine Reglerausgangsgröße (30) zum Schalten der Dämpfungskraft (32) auf weiche Kennung und bei Erkennung einer langwelligen Erregung der Straßenanregung (28) eine Reglerausgangsgröße (30) zum Schalten der Dämpfungskraft (32) auf harte Kennung erzeugt wird, daß bei einer periodischen Straßenanregung (28) und Nichterkennung einer kurz- oder langwelligen Erregung der Regler eine Reglerausgangsgröße (30) nach dem Regelalgorithmus für eine einmalige Straßenanregung (28) liefert.

2. Verfahren nach Anspruch 1, dadurch gekennzeichnet, daß der Regler (27) nach dem Huang-Algorithmus eine Reglerausgangsgröße (30) der Form liefert, daß bei einem Produkt von Aufbaubeschleunigung (26) und Relativgeschwindigkeit der Aufbaumasse (23) größer Null die Dämpfungskraft (32) auf harte Kennung geschaltet wird und bei einem Produkt kleiner oder gleich Null die Dämpfungskraft (32) in die weiche Kennung geschaltet wird oder bleibt.

3. Verfahren nach Anspruch 1, dadurch gekennzeichnet, daß der Regler (27) nach dem Skyhook-Algorithmus eine Reglerausgangsgröße (30) der Form liefert, daß bei einem Produkt von Aufbaugeschwindigkeit (22) und der Differenz der Aufbaugeschwindigkeit (22) und der vertikalen Radgeschwindigkeit v_{R} größer Null die Dämpfungskraft (32) auf harte Kennung geschaltet wird und bei einem Produkt kleiner oder gleich Null die Dämpfungskraft (32) in die weiche Kennung geschaltet wird oder bleibt.

4. Verfahren nach Ansprüche 1 bis 3, dadurch gekennzeichnet, daß nach einer erstmaligen Erkennung einer langwelligen periodischen Straßenanregung (28) die Dämpfungskraft (32) in einer Verzögerungszeit ΔT nach dem erstmaligen Vorzeichenwechsel der Aufbaubeschleunigung (26) in der harten Kennung bleibt.

5. Verfahren nach Anspruch 4, dadurch gekennzeichnet, daß die Größe der Verzögerungszeit ΔT von der Fahrgeschwindigkeit v des Fahrzeugs abhängig ist.

6. Verfahren nach Anspruch 5, dadurch gekennzeichnet, daß bei einer hohen Fahrgeschwindigkeit v eine längere Verzögerungszeit ΔT vorgesehen ist.

7. Verfahren nach einem oder mehreren der Ansprüche 1 bis 6, dadurch gekennzeichnet, daß die eine langwellige Straßenanregung (28) definierende Periodenzeit (33) und/oder die Verzögerungszeit ΔT als Konstanten im Regler (27) abgespeichert sind.

8. Verfahren nach einem oder mehreren der Ansprüche 1 bis 7, dadurch gekennzeichnet, daß die Stellgröße (29) für die Dämpferkraft (32) aus der Reglerausgangsgröße (30) und dem Stellgrößenanteil (31) der Hilfsregelgrößen gebildet wird.

9. Verfahren nach Anspruch 8, dadurch gekennzeichnet, daß der Stellgrößenanteil (31) aus den Hilfsregelgrößen Fahrzeuggeschwindigkeit, Lenkwinkel und/oder Bremsbetätigung gebildet wird.

10. Verfahren nach Anspruch 8 oder 9, dadurch gekennzeichnet, daß die Niveauregulierung als Hilfsgröße (31) in den Regelkreis eingeht.

11. Verfahren nach einem oder mehreren der Ansprüche 1 bis 10, dadurch gekennzeichnet, daß jedes Rad des Fahrwerks mit Sensoren zur Ermittlung der Aufbaubeschleunigung (26) und der Relativgeschwindigkeit (23) ausgerüstet ist.

12. Verfahren nach einem oder mehreren der Ansprüche 1 bis 10, dadurch gekennzeichnet, daß nur die Vorderachse mit Sensoren für die Aufbaubeschleunigung (26) und die Relativgeschwindigkeit (23) ausgerüstet ist und die Signale für die Hinterachse aus den Signalen der Vorderachse hergeleitet werden.

13. Verfahren nach Anspruch 12, dadurch gekennzeichnet, daß die Signale für die Hinterachse mit einer Verzögerung aus den Signalen der Vorderachse abgeleitet werden, wobei die Verzögerungszeit aus dem Radabstand und der Fahrgeschwindigkeit v des Fahrzeugs berechnet wird.

## Claims

1. A method for controlling a semi-active travelling gear having controllable vibration dampers which are provided with controllable valves, wherein the relative velocity between the vehicle body and the wheel mass, the vehicle body acceleration and/or the vehicle body velocity are measured or determined and form the input variables of a regulator to produce a correcting variable for the damping force, wherein the regulator (27) recognises a road surface excitation (28) and differentiates between an isolated and a reoccurring road surface excitation (28) and in the case of an isolated road surface excitation (28) the regulator (27) produces a regulator output variable (30) dependent either on the direction of the relative velocity occurring between the vehicle body mass and the wheel mass and on the direction of the vertical vehicle body velocity (Skyhook-algorithm) or however dependent upon the operational sign development of the product from the relative velocity between the vehicle body mass and the wheel mass and the vehicle body acceleration (Huang algorithm) for the purpose of producing the correcting variable for the damping force (32), characterised in that in the case of a reoccurring road surface excitation (28) the process of recognising a long-wave excitation occurs in the regulator (27)in such a manner that the operational sign of the vehicle body acceleration (26) does not change in the period of time (33) which defines a long-wave road surface excitation and the process of recognising a short-wave excitation, wherein the time intervals **T** of the switching signals are compared with a half period of time **T**_{**K**} (34) which defines a short wave road surface excitation (28) for the purpose of switching over to hard damping, occurs in such a manner that in the case of **T < T**_{**K**} a regulator output variable (30) is produced for the purpose of switching the damping force (32) to a soft characteristic and when recognising a long-wave excitation of the road surface excitation (28) a regulator output variable (30) is produced for the purpose of switching the damping force (32) to a hard characteristic and that, in the case of a reoccurring road surface excitation (28) and non-recognition of a short or long-wave excitation of the regulator, a regulator output variable (30) is provided according to the standard algorithm for an isolated road surface excitation (28).

2. A method according to claim 1, characterised in that the regulator (27) provides a regulator output variable (30) according to the Huang algorithm in such a form that, when the product from the vehicle body acceleration (26) and relative velocity of the vehicle body mass (23) is greater than zero, the damping force (32) is switched to a hard characteristic and when the product is smaller than or equal to zero, the damping force (32) is switched to or remains as the soft characteristic.

3. A method according to claim 1, characterised in that the regulator (27) provides a regulator output variable (30 according to the Skyhook algorithm in the form that when the product from the vehicle body velocity (22) and the difference of the vehicle body velocity (22) and the vertical wheel velocity **V**_{**R**} is greater than zero, the damping force (32) is switched to a hard characteristic and when the product is smaller than or equal to zero, the damping force (32) is switched to or remains as the soft characteristic.

4. A method according to claims 1 to 3, characterised in that after having recognised for the first time a long-wave reoccurring road surface excitation (28), the damping force (32) in a delay time **ΔT** after the first operational sign change of the vehicle body acceleration (26) remains in the hard characteristic.

5. A method according to claim 4, characterised in that the value of the delay time **ΔT** is dependent upon the travel velocity **v** of the motor vehicle.

6. A method according to claim 5, characterised in that the delay time **ΔT** is longer in the case of a high travel velocity **v.**

7. A method according to any one or several of claims 1 to 6, characterised in that the period of time (33) which defines a long-wave road surface excitation (28) and/or the delay time **ΔT** are stored in the regulator (27) as constants.

8. A method according to any one or several of claims 1 to 7, characterised in that the correcting variable (29) for the damping force (32) is formed from the regulator output variable (30) and the correcting variable portion (31) of the auxiliary control variables.

9. A method according to claim 8, characterised in that the correcting variable portion (31) is formed from the auxiliary control variables: motor vehicle velocity, steering angle and/or brake actuation.

10. A method according to claim 8 or 9, characterised in that the level regulating variable is input into the control loop as an auxiliary variable (31).

11. A method according to any one or several of claims 1 to 10, characterised in that each wheel of the travelling gear is equipped with sensors for ascertaining the vehicle body acceleration (26) and the relative velocity (23).

12. A method according to any one or several of claims 1 to 10, characterised in that only the front axle is equipped with sensors for the vehicle body acceleration (26) and the relative velocity (23) and the signals for the rear axle are derived from the signals of the front axle.

13. A method according to claim 12, characterised in that the signals for the rear axle are derived with a delay from the signals of the front axle, wherein the delay time is calculated from the wheel spacing and the travel velocity **v** of the motor vehicle.

## Revendications

1. Procédé de réglage d'un train de roulement semiactif à amortisseurs réglables dotés de vannes commandées, dans lequel la vitesse relative entre le châssis et la masse des roues, l'accélération du châssis et/ou la vitesse du châssis sont mesurées ou déterminées et forment les signaux d'entrée d'un régulateur pour produire un signal de réglage de la force d'amortissement, dans lequel lorsque le régulateur (27) détecte une excitation (28) provenant de la route, il distingue si l'excitation (28) provenant de la route est unique ou périodique et, dans le cas d'une excitation (28) unique provenant de la route, le régulateur (27) produit, pour former le signal de réglage de la force d'amortissement (32), un signal de sortie de régulateur (30) selon les directions de la vitesses relative entre le châssis et la masse des roues et de la vitesses verticale du châssis (algorithme Skyhook) ou selon le signe du produit de la vitesse relative entre le châssis et la masse des roues, et de l'accélération du châssis (algorithme de Huang), caractérisé en ce que dans le cas d'une excitation (28) périodique provenant de la route, dans le régulateur (27) l'identification d'une excitation de grande longueur d'onde résulte de ce que le signe de l'accélération du châssis (26) ne se modifie pas au cours de la période (33) définissant une excitation de grande longueur d'onde provenant de la route, et l'identification d'une excitation de courte longueur d'onde de ce que les intervalles de temps (T) des signaux de commutation pour une commutation sur amortissement dur se comparent avec une demi-période (T_{K}) (34) définissant une excitation (28) de courte longueur d'onde provenant de la route de telle sorte que, si T < T_{K}, il est produit un signal de sortie de régulateur (30) pour commuter la force d'amortissement (32) sur une caractéristique molle, et qu'en cas d'identification d'une excitation (28) de grande longueur d'onde provenant de la route il est produit un signal de sortie de régulateur (30) pour la commutation de la force d'amortissement (32) sur une caractéristique dure, en ce que lorsque le régulateur détecte une excitation (28) périodique provenant de la route sans distinguer entre une excitation de courte ou de grande longueur d'onde, il délivre un signal de sortie de régulateur (30) base sur l'algorithme de régulation pour une excitation (28) unique provenant de la route.

2. Procédé selon la revendication 1, caractérisé en ce que le régulateur (27) délivre suivant l'algorithme de Huang un signal de sortie de régulateur (30) sous une forme telle que, lorsque le produit de l'accélération du châssis (26) et de la vitesse relative du châssis (23) est supérieur à zero, la force d'amortissement (32) est commutée sur une caractéristique dure, et que lorsque le produit est inférieur ou égal à zéro, la force d'amortissement (32) est commutée ou maintenue sur une caractéristique molle.

3. Procédé selon la revendication 1, caractérisé en ce que, selon l'algorithme Skyhook, le régulateur (27) délivre un signal de sortie de régulateur (30) sous une forme telle que, lorsque le produit de la vitesse du châssis (22) et de la différence entre la vitesse du châssis (22) et la vitesse verticale de la roue v_{R} est supérieur a zero, la force d'amortissement (32) est commutée sur une caractéristique dure et que, lorsque ce produit est inférieur ou égal à zéro, la force d'amortissement (32) est commutée ou maintenue sur une caractéristique molle.

4. Procédé selon les revendications 1 à 3, caractérisé en ce qu'après une première détection d une excitation (28) périodique de grande longueur d'onde provenant de la route, la force d'amortissement (32) est maintenue sur la caractéristique dure pendant une durée de temporisation ΔT après le premier changement de signe de l'accélération du châssis (26).

5. Procédé selon la revendication 4, caractérisé en ce que la grandeur de la durée de temporisation ΔT dépend de la vitesse de déplacement v du véhicule.

6. Procédé selon la revendication 5, caractérisé en ce qu'une durée de temporisation ΔT plus longue est prévue pour une vitesse de déplacement v élevée.

7. Procédé selon l'une ou plusieurs des revendications 1 à 6, caractérisé en ce que la durée de la période (33) définissant une excitation (28) de longue durée provenant de la route et/ou la durée de temporisation ΔT sont conservées en mémoire sous forme de constantes dans le régulateur (27).

8. Procédé selon l'une ou plusieurs des revendications 1 à 7, caractérisé en ce que le signal de réglage (29) de la force d'amortissement (32) est constitué du signal de sortie de régulateur (30) et de la partie signal de réglage (31) des signaux auxiliaires de réglage.

9. Procédé selon la revendication 8, caractérisé en ce que la partie signal de réglage (31) est constituée des signaux auxiliaires de réglage, vitesse de déplacement du véhicule, angle d'inclinaison et/ou actionnement des freins.

10. Procédé selon la revendication 8 ou 9, caractérisé en ce que la régulation du niveau est introduite dans la boucle de régulation sous forme de signal auxiliaire (31).

11. Procédé selon l'une ou plusieurs des revendications 1 à 10, caractérisé en ce que chaque roue du train de roulement est équipée de capteurs de détection de l'accélération du châssis (26) et de la vitesse relative (23).

12. Procédé selon l'une ou plusieurs des revendications 1 à 10, caractérisé en ce que seul l'essieu avant est équipé de détecteurs de l'accélération du châssis (26) et de la vitesse relative (23), et en ce que les signaux pour l'essieu arrière sont déduits des signaux de l'essieu avant.

13. Procédé selon la revendication 12, caractérisé en ce que les signaux pour l'essieu arrière sont déduits des signaux de l'essieu avant avec une temporisation, la durée de la temporisation étant calculée à partir de l'écartement entre les roues et de la vitesse de déplacement v du véhicule.
